# EUROPÄISCHE PATENTSCHRIFT

(11) **EP 2 951 467 B1**
(45) Veröffentlichungstag und Bekanntmachung des Hinweises auf die Patenterteilung: **17.05.2017**
(21) Anmeldenummer: 14711908.5
(22) Anmeldetag: 27.01.2014
(51) Int. Cl.: F03D 15/00, F16H 57/08, F16C 33/10

(54) **WINDKRAFTANLAGENGETRIEBE**
WIND POWER PLANT GEAR MECHANISM
TRANSMISSION D'ÉOLIENNE

(30) Priorität: 30.01.2013 AT 500672013
(43) Veröffentlichungstag der Anmeldung: 09.12.2015
(73) Patentinhaber: Miba Gleitlager Austria GmbH, 4663 Laakirchen (AT)
(72) Erfinder: HAGER, Gunther, A-4563 Ottsdorf am Ziehberg (AT); HÖLZL, Johannes Sebastian, A-4880 Berg im Attergau (AT)
(74) Vertreter: Burger, Hannes
(86) Internationale Anmeldenummer: PCT/AT2014/050030
(87) Internationale Veröffentlichungsnummer: WO 2014/117197

(56) Entgegenhaltungen:
- AT-B1- 509 624
- DE-A1- 2 229 235
- DE-A1- 3 318 967
- JP-A- S4 827 143
- JP-A- S61 241 522
- JP-U- S5 849 017
- JP-U- S6 175 520
- JP-U- S62 151 426

## Beschreibung

Die Erfindung betrifft ein Windkraftanlagengetriebe mit einer Achse und einem Zahnrad, wobei zwischen der Achse und dem Zahnrad zumindest eine Gleitlagerbuchse angeordnet ist, sowie eine Windkraftanlage mit einem Windkraftanlagengetriebe.

Derzeitige kommerzielle Lösungen für die Lagerung von Planetenzahnrädern in Planetengetrieben für Windkraftanlagen sind ausschließlich Wälzlagerlösungen. Bei diesen Lagerungen tritt häufig das Problem auf, dass aufgrund von umlaufenden, zyklischen Lasten die Außenringe rotieren und in Folge zusätzlicher axialer Kräfte die Wälzlager auch axial ihre Sollposition verlassen und auswandern. Zur Beherrschung dieses Problems wurden Lagerlösungen ohne Außenringe vorgeschlagen.

Gleitlagerlösungen für Planetengetriebe von Windkraftanlagen wurden ebenfalls bereits beschrieben, jedoch bislang kommerziell noch nicht umgesetzt. Die Wahrscheinlichkeit, dass Gleitlager ebenfalls aufgrund der wirkenden Lasten auswandern ist allerdings sehr hoch. AT509624B1 offenbart eine Windkraftanlagengetriebe mit den Merkmale des Oberbegriffes des Anspruchs 1. Der vorliegenden Erfindung liegt daher die Aufgabe zugrunde, eine Gleitlagerung für Windkraftanlagengetriebe zu schaffen, bei der das Auswandern der Gleitlager verhindert wird. Zur Lösung der Aufgabe ist bei einem Windkraftanlagengetriebe vorgesehen, dass die zumindest eine Gleitlagerbuchse über einen konischen Presssitz mit dem Zahnrad verbunden ist, wobei die Gleitlagerbuchse eine ersten Stirnfläche und eine dieser entlang einer Längsmittelachse durch die Gleitlagerbusche eine zweite Stirnfläche aufweist, und wobei die erste Stirnfläche einen Durchmesser d sowie die zweite Stirnfläche einen Durchmesser D aufweisen, wobei der Durchmesser D größer ist als der Durchmesser d und wobei anschließend an die Stirnfläche mit dem Durchmesser D eine Anlagefläche für die zumindest eine Gleitlagerbuchse ausgebildet ist, sowie bei der eingangs genannte Windkraftanlage, dass ein dementsprechend ausgebildetes Windkraftanlagengetriebe eingesetzt ist.

Von Vorteil ist dabei, dass durch die Ortsfestigkeit der Gleitlagerbuchse durch eine einfache konstruktive Maßnahme deutlich verbessert werden kann. Es sind also keine weiteren Maßnahmen hierfür, wie beispielsweise das Verkleben oder das Verschweißen der Gleitlagerbuchse mit dem Zahnrad erforderlich. Darüber hinaus wird mit dem konischen Presssitz aber auch eine bessere Zentrierung des Zahnrades erreicht, wodurch ein gleichmäßigerer Lauf des Zahnrades erhalten werden kann. Es kann mit dieser Ausgestaltung der Gleitlagerbuchse erreicht werden, dass selbst im ungünstigsten Fall, dass die Gleitlagerbuchse aufgrund von zyklischen Lasten und daraus resultierenden Verformungen zu rotieren beginnt, durch in axialer Richtung wirkende Kräfte eine Rückstellung der Gleitlagerbuchse erfolgt. Somit kann das axiale Auswandern besser verhindert werden. Durch die Anlagefläche für die Gleitlagerbuchse werden aus dem konischen Lagersitz resultierende axiale Kräfte abgestützt, wodurch die Verhinderung des Auswanderns der Gleitlagerbuchse unterstützt wird.

Bevorzugt beträgt das Verhältnis von großem Durchmesser zu kleinem Durchmesser der Gleitlagerbuchse (D/d) maximal 1,2, wobei gemäß einer weiteren Ausführungsvariante dieses Verhältnis D/d bevorzugt ausgewählt ist aus einem Bereich von 1,0001 bis 1,02, um damit die auf die Anlagefläche wirkende axiale Kraft zu beschränken.

Die Anlagefläche ist vorzugsweise durch das Zahnrad selbst gebildet, da damit die Montage dieser Baugruppe vereinfacht werden kann. Dazu kann vorgesehen sein, dass die Anlagefläche durch einen Radialvorsprung des Zahnrades gebildet ist, da dieser einfach herstellbar ist.

Nach einer weiteren Ausführungsvariante kann vorgesehen sein, dass zwei Gleitlagerbuchsen zwischen dem Zahnrad und der Achse zur Lagerung des Zahnrades angeordnet sind, wobei die beiden Gleitlagerbuchsen derart angeordnet sind, dass die beiden zweiten Stirnflächen mit dem größeren Durchmesser D aufeinander zuweisen. Es werden damit die voranstehend genannten Effekte weiter verbessert, da durch die beiden gegengleich eingebauten Gleitlagerbuchsen das axiale Wandern der Gleitlagerbuchsen besser verhindert werden kann.

Die Anlageflächen für die Gleitlagerbuchsen können bei dieser Ausführungsvariante durch einen Ringsteg gebildet sein, der an dem Zahnrad radial nach innen in Richtung auf die Achse sich erstreckend ausgebildet ist. Vorzugsweise ist dieser Ringsteg am Zahnrad in Axialrichtung betrachtet in der Mitte angeordnet. Der Ringsteg hat dabei den zusätzlichen Vorteil, dass durch diesen gegebenenfalls eine Schmiermittel zu den Lagerstellen zugeführt werden kann. Es kann aber auch vorgesehen sein, dass die Anlagefläche für jeweils ein Gleitlager durch das jeweils andere Gleitlager gebildet ist, sodass diesbezüglich keine weiteren Maßnahmen am Zahnrad zu treffen sind.

Die Gleitlagerbuchse(n) können als Mehrschichtgleitlager ausgebildet sein. Neben dem bekannten Effekt, dass damit die tribologischen Eigenschaften der Gleitlagerung gezielt an die jeweiligen Anforderungen angepasst werden können, wird damit vor allem auch erreicht, dass durch eine entsprechende Materialpaarung mit dem Zahnrad höhere Reibungskräfte zur Verfügung gestellt werden, wodurch die Haltekraft des Presssitzes verstärkt werden kann.

Dabei kann vorgesehen sein, dass das Mehrschichtgleitlager im Bereich der Achse wie bekannt eine Gleitschicht aufweist, wobei gemäß einer weiteren Ausführungsvariante die Gleitschicht über die Länge der Gleitlagerbuchse in Axialrichtung eine gleichmäßige Schichtdicke aufweist.

Die Gleitschicht kann bis in den Bereich der Stirnfläche mit dem Durchmesser D und/oder bis in den Bereich der Stirnfläche mit dem Durchmesser d ausgebildet sein. Es wird damit im Falle des Rotierens der Gleitlagerbuchse(n) auch in radialer Richtung eine entsprechende Gleitfläche zur Verfügung gestellt, d.h. ein Axiallager, wodurch in diesem Fall die Gleitlagerbuchse(n) besser vor Beschädigungen geschützt werden kann bzw. können.

Unterstützend zum Presssitz kann die Gleitlagerbuchse bzw. können die Gleitlagerbuchsen zusätzlich formschlüssig mit dem Zahnrad verbunden sein, wodurch die Ortsfestigkeit der Gleitlagerbuchse(n) weiter verbessert werden kann.

Es kann aber auch vorgesehen werden, dass eine an dem Zahnrad anliegende Oberfläche der Gleitlagerbuchse(n) eine Oberflächenrauhung aufweist. Durch die Oberflächenrauhung kann Haltekraft des Presssitzes weiter vergrößert werden, wodurch ebenfalls die Ortsfestigkeit der Gleitlagerbuchse weiter verbessert werden kann.

Bei der Ausführungsvariante des Zahnrades mit dem voranstehend genannten Ringsteg kann dieser unter Ausbildung eines Zwischenraums beabstandet zur Achse ausgebildet sein. Es kann damit eine einfache Möglichkeit zur Schmiermittelzuführung geschaffen werden.

Es ist aber auch möglich, dass in den Zwischenraum eine Verbindungsleitung mündet, die den Zwischenraum mit der Umgebungsatmosphäre verbindet, wodurch hinsichtlich der Schmiermittelverteilung die Drosselwirkung der Lagerstellen verringert werden kann.

Zum besseren Verständnis der Erfindung wird diese anhand der nachfolgenden Figuren näher erläutert.

Es zeigen jeweils in stark schematisch vereinfachter Darstellung:
- Fig. 1: einen Ausschnitt aus einem Windkraftanlagengetriebe in Seitenansicht geschnitten;
- Fig. 2: einen Ausschnitt aus einer Ausführungsvariante des Windkraftanlagengetriebes in Seitenansicht geschnitten;
- Fig. 3: einen Ausschnitt aus einer weiteren Ausführungsvariante des Windkraftanlagengetriebes in Seitenansicht geschnitten;
- Fig. 4: einen Ausschnitt aus einer anderen Ausführungsvariante des Windkraftanlagengetriebes in Seitenansicht geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Bekanntlich umfassen Windkraftanlagen einen Turm an dessen oberen Ende eine Gondel angeordnet ist, in der der Rotor mit den Rotorblättern gelagert ist. Dieser Rotor ist über ein Windkraftanlagengetriebe mit einem Generator, der sich ebenfalls in der Gondel befindet, wirkungsverbunden, wobei über das Windkraftanlagengetriebe die niedrige Drehzahl des Rotors in eine höhere Drehzahl des Generatorrotors übersetzt wird. Da derartige Ausführungen von Windkraftanlagen zum Stand der Technik gehören, sei an dieser Stelle an die einschlägige Literatur hierzu verwiesen.

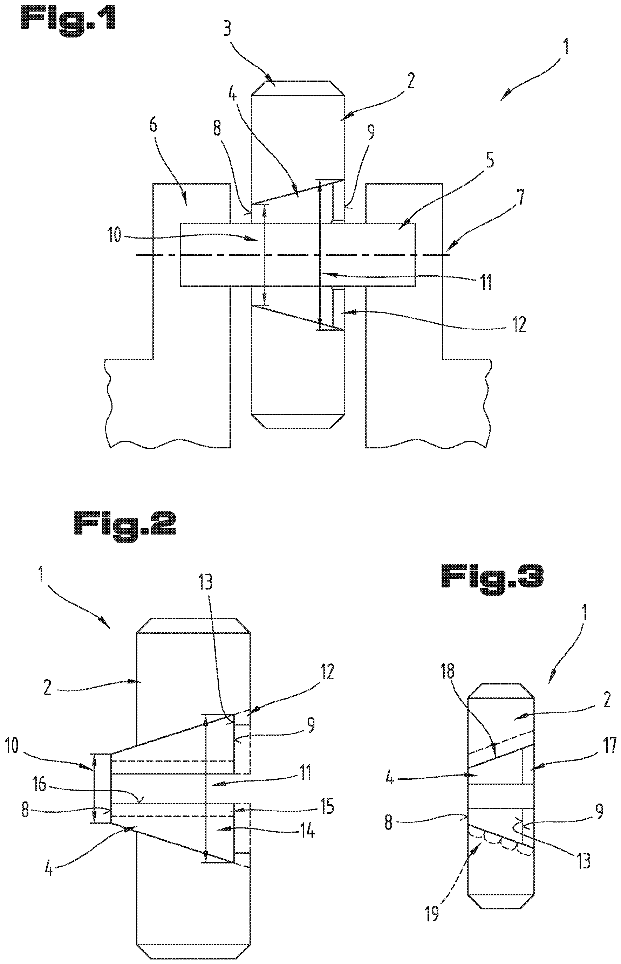

In Fig. 1 ist ein Ausschnitt einer ersten Ausführungsvariante eines Windkraftanlagengetriebes 1 nach der Erfindung dargestellt. Dieses weist zumindest ein Zahnrad 2 auf. Dieses Zahnrad 2 ist in dem Windkraftanlagengetriebe 1 in kämmenden Eingriff zwischen einem zweiten und einem dritten Zahnrad (beide nicht dargestellt) angeordnet. Dazu weist das zumindest eine Zahnrad 2 eine Außenstirnverzahnung 3 auf.

In der Ausführungsform des Windkraftanlagengetriebes 1 als Planetengetriebe, insbesondere als Hauptgetriebe einer Windraftanlage, ist das zweite Zahnrad als Sonnenrad mit einer Stirnverzahnung ausgeführt, das mit einer Welle, die zum Generatorrotor führt, drehfest verbunden ist. Das Sonnenrad ist üblicherweise von mehreren Zahnrädern 2, den Planetenrädern, beispielsweise zwei, vorzugsweise drei oder vier, umgeben.

Das dritte Zahnrad ist als Hohlrad ausgeführt, das das zumindest eine Zahnrad 2 bzw. die Zahnräder 2 in radialer Richtung umgibt und das an einer inneren Oberfläche ebenfalls zumindest teilweise eine Verzahnung aufweist, die in kämmenden Eingriff mit der Außenstirnverzahnung 3 des Zahnrades 2 bzw. der Zahnräder 2 steht. Das Hohlrad ist drehfest mit einer Rotorwelle des Rotors der Windkraftanlage oder drehfest mit dem Gehäuse des Windkraftanlagengetriebes 1 verbunden.

Die Verzahnungen der Zahnräder 2 in dem Windkraftanlagengetriebe 1 können als Geradverzahnung oder insbesondere als Schrägverzahnung ausgeführt sein.

Das zumindest eine Zahnrad 2 (es wird im folgenden nur mehr ein Zahnrad 2 beschrieben, wobei diese Ausführungen auch auf alle bzw. mehrere dieser Zahnräder 2 des Windkraftanlagengetriebes 1 übertragbar sind) ist über ein Gleitlager in Form einer Gleitlagerbuchse 4, insbesondere ein mehrschichtiges Gleitlager, auf einer Achse 5, also beispielsweise einem Planetenbolzen (der so genannten Planetenachse) gelagert. Diese Achse 5 kann entweder einstückig mit zumindest einem Teil eines Zahnradträgers 6, insbesondere einem Planetenträger, ausgebildet sein oder sie ist als gesonderter Bauteil in einer Bohrungen des Zahnradträgers 6 eingesetzt.

Es sei darauf hingewiesen, dass nicht nur einstufige Ausführungen von derartigen Windkraftanlagengetrieben 1 im Rahmen der Erfindung möglich sind, sondern auch mehrstufige, beispielsweise zwei- oder dreistufige, wozu in zumindest einem Zahnrad 2, insbesondere einem Planetenrad, weitere Stirnradstufen integriert sein können. Zudem sind auch Parallelgetriebe, wie sie beispielsweise in der EP 2 284 420 B1 beschrieben sind, im Rahmen der Erfindung darstellbar. Es sei daher dazu auf diese Druckschrift verwiesen, die in diesem Umfang zu gegenständlicher Beschreibung gehört. Demgemäß kann das Windkraftanlagengetriebe 1 ein einfaches Planetengetriebe und ein paralleles zwei- oder mehrstufiges Planetengetriebe oder generell mehrere Planetengetriebe aufweisen.

Des Weiteren sei nochmals angemerkt, dass, obwohl bevorzugt, die Erfindung nicht nur in Planetengetrieben von Windkraftanlagen Anwendung findet, sondern generell in Getrieben für Windkraftanlagen verwendet werden kann, insbesondere zur Übersetzung der langsamen Drehzahl des Rotors einer Windkraftanlage in eine höhere Drehzahl.

Die Gleitlagerbuchse 4 ist drehfest über einen Presssitz mit dem Zahnrad 2 verbunden. Der Presssitz ist konisch ausgebildet. Dazu ist die Gleitlagerbuches 4 kegelstumpfförmig ausgebildet und weist entlang einer Längsmittelachse 7 einander gegenüberliegende Stirnflächen 8, 9 auf. Die erste Stirnfläche 8 weist einen äußeren Durchmesser d 10 auf und die zweite Stirnfläche 9 einen äußeren Durchmesser D 11, wobei der erste Durchmesser d 10 kleiner ist als der zweite Durchmesser D 11.

Die absolute Größe der Durchmesser d 10 und D 11 richtet sich nach der jeweiligen Getriebegröße. Vorzugsweise beträgt dabei das Verhältnis D/d jedoch maximal 1,2, insbesondere maximal 1,1. Insbesondere wird das Verhältnis D/d ausgewählt aus einem Bereich von 1,0001 bis 1,02, vorzugsweise aus einem Bereich von 1,0001 bis 1,008.

Insbesondere kann die diametrale Kegelaufweitung zwischen 0,01 % und 0,6%, beispielsweise 0,1 %, des äußeren Durchmesser D 11 betragen.

Die Gleitlagerbuchse 4 kann einschichtig ausgebildet sein und besteht in diesem Fall aus einem Gleitwerkstoff, also einem Werkstoff der in Bezug auf den Werkstoff der Achse 5 eine reduzierte Reibung aufweist. Dazu kann dieser Gleitwerkstoff aus den nachfolgend genannten Werkstoffen für eine Gleitschicht ausgewählt sein.

Die Gleitlagerbuchse 4 nach der Erfindung kann bereits in der entsprechenden Form hergestellt werden, beispielsweise aus einem entsprechenden Blechzuschnitt. Es ist aber auch möglich diese durch Aufweitung mit einem entsprechenden Werkzeug aus einer zylindrischen Gleitlagerbuchse zu bilden. Beispielsweise kann diese Aufweitung zeitgleich mit der Einpressung der Gleitlagerbuchse 4 in das Zahnrad 2 zur Ausbildung des Presssitzes erfolgen.

In den Fig. 2, 3 und 4 sind Ausschnitte weiterer und gegebenenfalls für sich eigenständiger Ausführungsformen des Windkraftanlagengetriebes 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird dazu auf die detaillierte Beschreibung der Fig. 1 hingewiesen bzw. Bezug genommen.

Bei der Ausführungsvariante des Windkraftanlagengetriebes 1 nach Fig. 2 weist das Zahnrad 2 im Bereich des zweiten (großen) Durchmessers D 11 der Stirnfläche 9 der Gleitlagerbuchse 4 einen Radialvorsprung 12 auf, der vorzugsweise kreisringförmig ausgebildet ist. Der Radialvorsprung 12 dient als Axialsicherung der Gleitlagerbuchse 4, sodass diese mit der Stirnfläche 9 an dem Radialvorsprung 12 zumindest zeitweise anliegt, dieser also eine Anlagefläche 13 für die Gleitlagerbuchse 4 in axialer Richtung bildet. Dazu ragt der Radialvorsprung 12 radial nach innen, sodass eine Überdeckung - in axialer Richtung betrachtet - mit der Gleitlagerbuchse vorhanden ist.

Der Radialvorsprung 12 sich kann durchgehend über den gesamten Umfang der Gleitlagerbuchse 4 erstrecken. Es ist aber auch möglich, dass nur eine einzelner Radialvorsprung 12 oder mehrere Radialvorsprünge 12 verteilt über den inneren Umfang des Zahnrades 2 angeordnet werden, die sich nur einen Teilbereich von 360 ° des Umfanges erstrecken.

Weiter ist es möglich, dass sich der Radialvorsprung 12 bis zur Achse 5 und beabstandet von dieser erstreckt.

Der Radialvorsprung 12 ist bevorzugt einstückig mit dem Zahnrad 2 ausgebildet. Es ist aber auch möglich, dass dieser durch ein gesondertes Bauteil gebildet wird, das mit dem Zahnrad 2 verbunden wird.

Nach einer Ausführungsvariante dazu kann der Radialvorsprung 12 anstelle am Zahnrad 2 auf der Achse 5 (siehe Fig. 1) angeordnet sein, beispielsweise als Ringsteg.

Dieser Radialvorsprung 12 zur Aufnahme von Axialkräften auch bei der Ausführungsvariante nach Fig. 1 vorhanden.

Aus Fig. 2 ist weiter ersichtlich, dass in radialer Richtung betrachtet die Gleitlagerbuchse 4 nicht zwingend fluchtend zum Zahnrad 2 angeordnet sein muss, wie dies in Fig. 1 dargestellt ist, sondern auch eine in axialer Richtung versetzte Anordnung möglich ist, wobei in diesem Fall die Gleitlagerbuchse 4 vorzugsweise im Bereich des ersten Durchmesser d 10 in axialer Richtung über das Zahnrad 2 vorragt.

Strichliert ist in Fig. 2 auch die Ausführungsvariante der Gleitlagerbuchse 4 als Mehrschichtgleitlager dargestellt.

Das Mehrschichtgleitlager besteht zumindest aus einer Stützschicht 14, die beispielsweise aus einem Stahl besteht, und einer Gleitschicht 15, die radial innen auf der Stützschicht 14 aufgebracht ist. Die Gleitschicht 15 bildet dabei eine Lauffläche 16 für die Achse 5 (siehe Fig. 1).

Neben dieser zweischichtigen Ausführung des Mehrschichtgleitlagers besteht im Rahmen der Erfindung auch die Möglichkeit, dass Zwischenschichten zwischen der Gleitschicht 15 und der Stützschicht 14 angeordnet sind, beispielsweise eine Lagermetallschicht und/oder zumindest eine Bindeschicht und/oder eine Diffusionssperrschicht.

Beispiele für Werkstoffe für die einzelnen Schichten des Mehrschichtgleitlagers sind aus der AT 509 624 B1 bekannt, auf die diesbezüglich Bezug genommen wird und die in diesem Umfang zur Beschreibung vorliegender Erfindung gehört.

Es sind aber auch einschichtige Ausführungsvarianten der Gleitlagerbuchse 4 möglich. So kann diese beispielsweise aus einer Kupferlegierung, insbesondere Bronze oder Messing, bestehen.

Die Gleitschicht 15 bzw. sämtliche Schichten der mehrschichtigen Gleitlagerbuchse kann bzw. können ebenfalls eine kegelstumpfförmige Form aufweisen. Andererseits besteht die Möglichkeit, wie dies in Fig. 2 dargestellt ist, dass die Gleitschicht 15 über die Länge der Gleitlagerbuchse 4 in Axialrichtung eine gleichmäßige Schichtdicke aufweist.

Nach einer weitern Ausführungsvariante der Gleitlagerbuchse 4 kann vorgesehen sein, dass die Gleitschicht 15 bis in den Bereich der Stirnfläche mit dem Durchmesser D ausgebildet ist, wie dies in Fig. 2 strichliert dargestellt ist. Die Gleitschicht 15 weist also nicht nur eine Erstreckung in Längsrichtung der Gleitlagerbuchse 4 auf sondern auch in Radialrichtung. Prinzipiell kann dabei die Gleitschicht 15 an der Stirnfläche 9 der Gleitlagerbuchse 4 gesondert aufgebracht werden.

Selbstverständlich besteht auch die Möglichkeit, dass einer derartige Gleitschicht auch auf der Stirnfläche 8 der Gleitlagerbuchse 4 aufgebracht wird, sodass also die Stützschicht 14 beidseitig auf den Stirnflächen 8, 9 zumindest teilweise beschichtet ist.

In axialem Verlauf jeweils neben der Stirnfläche 8 und/oder der Stirnfläche 9 der Gleitlagerbuchse 4 kann weiter jeweils eine Anlaufscheibe zwischen der Gleitlagerbuchse 4 und dem Zahnradträger 6 (siehe Fig. 1) vorgesehen sein. Dabei kann die Gleitschicht 15 der Gleitlagerbuchse 4 bis in die Stirnfläche zu den Anlaufscheiben hochgezogen sein.

Die Gleitlagerbuchse 4 kann also neben der radialen Lagerfunktion auch eine axiale Lagerfunktion erfüllen.

Bei der Ausführungsvariante des Windkraftanlagengetriebes 1 nach Fig. 3 ist anstelle des Radialvorsprunges 12 nach Fig. 2 ein, insbesondere scheibenförmiges, Bauelement 17 angeordnet, das entweder mit dem Zahnrad 2 oder mit der Achse 5 (siehe Fig. 1) verbunden sein kann und die Anlagefläche 13 für die Gleitlagerbuchse 4 bildet.

Weiter ist in Fig. 3 strichliert dargestellt, dass die Gleitlagerbuchse 4 zusätzlich oder alternativ auch über zumindest ein Formschlusselement 18 mit dem Zahnrad 2 verbunden sein kann. Dieses Formschlusselement 19 kann beispielsweise ein auf der Außenoberfläche der Gleitlagerbuchse 5, die dem Zahnrad 2 zugewandt ist, angeordneter Längssteg sein, der in eine entsprechende Längsnut des Zahnrades 2 eingeschoben wird. Der Längssteg kann sich dabei über zumindest einen Teilbereich der oder über die gesamte Länge zwischen den beiden Stirnflächen 8, 9 der Gleitlagerbuchse 4 erstrecken.

Es können auch mehr als ein Längssteg an der äußeren Oberfläche der Gleitlagerbuchse 4 angeordnet werden, beispielsweise zwei, drei, vier, etc., wobei diese in diesem Fall vorzugsweise symmetrisch über den Umfang der Gleitlagerbuchse 4 verteilt angeordnet werden.

Das Formschlusselement 18 kann aber auch eine andere geeignete Gestalt aufweisen.

Im unteren Teil der Gleitlagerbuchse 4 in Fig. 3 ist eine Ausführungsvariante des Formschlusses der Gleitlagerbuchse 4 mit der die Gleitlagerbuchse 4 aufnehmenden Bohrung im Zahnrad 2 strichliert dargestellt, wobei die Darstellung zur besseren Kenntlichmachung unproportional ist. Bei dieser Ausführungsvariante, die alternativ oder zusätzlich zum Formschlusselement 18 vorgesehen werden kann, weist eine an dem Zahnrad 2 anliegende Oberfläche 19 der Gleitlagerbuchse 4, d.h. deren Mantelfläche zumindest bereichsweise, insbesondere zur Gänze, eine Oberflächenrauhung auf. Die Oberflächenrauhung kann durch entsprechenden abrasiven Abtrag von Material hergestellt werden, beispielsweise durch Sandstrahlen oder durch Erodieren. Insbesondere kann dabei die Oberfläche 19 einen arithmetischen Mittenrauwert Ra nach DIN EN ISO 4287 aufweisen, der ausgewählt aus einem Bereich mit einer unteren Grenze von 1 µm und einer oberen Grenze von 20 µm, insbesondere ausgewählt aus einem Bereich mit einer unteren Grenze von 4 µm und einer oberen Grenze von 10 µm. Des weiteren kann diese Oberfläche 19 eine maximale Rauheitsprofilhöhe Rz nach DIN EN ISO 4287 aufweisen, die ausgewählt aus einem Bereich mit einer unteren Grenze von 2 µm und einer oberen Grenze von 100 µm, insbesondere ausgewählt aus einem Bereich mit einer unteren Grenze von 20 µm und einer oberen Grenze von 70 µm.

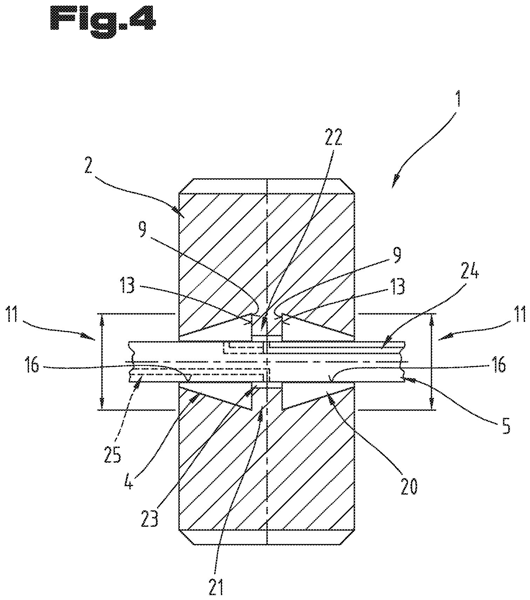

In Fig. 4 ist ein Ausschnitt aus einer weiteren Ausführungsvariante des Windkraftanlagengetriebes 1 in Seitenansicht geschnitten dargestellt. Gezeigt ist wiederum das Zahnrad 2, das auf der Achse 5 über zwei Gleitlagerbuchsen 4, 20 gelagert ist, wozu die Gleitlagerbuchsen zwischen der Achse 5 und dem Zahnrad 2 angeordnet sind.

Die Gleitlagerbuchsen 4, 20 weisen wiederum eine konische Form auf und in konischen Aufnahmen im Zahnrad 2 angeordnet, wodurch der konische Pressitz ausgebildet wird. Dabei erfolgt die Anordnung derart, dass die Stirnflächen 9 mit dem jeweils größeren Durchmesser 11 der beiden Gleitlagerbuchsen 4, 20 aufeinander zuweisen. Mit anderen Worten ausgedrückt sind die Gleitlagerbuchsen 4, 20 im Zahnrad 2 mit sich in axialer Richtung nach außen verjüngendem Querschnitt angeordnet. Dadurch sind die beiden Gleitlagerbuchsen 4, 20 gegengleich im Zahnrad 2 angeordnet.

Zwischen den beiden Gleitlagerbuchsen 4, 20 ist ein Zwischenraum 21 ausgebildet, in den ein Ringsteg 22 des Zahnrades 2 ragt. Der Ringsteg 22 bildet die Anlageflächen 13 für die Stirnflächen 9 der beiden Gleitlagerbuchsen 4, 20.

Nach einer bevorzugten Ausführungsvariante erstreckt sich der Ringsteg 22 in radialer Richtung nicht bis zur Achse 5, sodass dieser unter Ausbildung eines Zwischenraums 23 beabstandet zur Oberfläche der Achse 5 angeordnet ist. Dieser Zwischenraum 23 kann zur Zuführung eines Schmiermittels, insbesondere Schmieröls verwendet werden, wozu in diesen Zwischenraum 23 eine Zuführleitung 24 für das Schmiermittel mündet. Vorzugsweise ist die Zuführleitung 24 durch die Achse 5 geführt, kann aber auch durch das Zahnrad 2 geführt sein.

Alternativ oder zusätzlich dazu besteht die Möglichkeit, dass das Schmiermittel direkt zu den Laufflächen 16 zugeführt wird, wie dies in Fig. 4 strichliert dargestellt ist.

Der Zwischenraum 24 kann aber auch mit einer Verbindungsleitung 25 mit der Umgebungsatmosphäre verbunden sein. Vorzugsweise ist die Verbindungsleitung 25 durch die Achse 5 geführt (wie dies in Fig. 4 strichliert dargestellt ist), kann aber auch durch das Zahnrad 2 geführt sein. Es kann damit die Drosselwirkung der Lagerstellen reduziert werden.

Gemäß einer speziellen Ausführungsvariante des Windkraftanlagengetriebes 1 nach Fig. 4 kann vorgesehen sein, dass auf den Ringsteg 22 verzichtet wird und dafür die beiden Gleitlagerbuchsen 4, 20 so angeordnet werden, dass sie mit ihren Stirnflächen 9 aneinander anliegen.

Somit bildet jeweils eine der beiden Gleitlagerbuchsen 4, 20 die Anlagefläche 13 für die andere Gleitlagerbuchse 4, 20.

Hinsichtlich der weiteren möglichen Ausgestaltungen des Windkraftanlagengetriebes 1 dieser Ausführungsvariante, insbesondere hinsichtlich der Gleitlagerbuchsen 4, 20, sei auf voranstehende Ausführungen verwiesen.

Zur Ausbildung des konischen Presssitzes können bei allen Ausführungsvarianten der Erfindung zylinderförmige Gleitlagerbuchsen 4, 20 verwendet werden. Diese werden in die entsprechenden Aufnahmen im Zahnrad 2 eingeführt und danach zur konischen Form mit einem entsprechenden Werkzeug aufgeweitet.

Der Ordnung halber sei abschließend darauf hingewiesen, dass zum besseren Verständnis des Aufbaus Windkraftanlagengetriebes 1 dieses bzw. dessen Bestandteile teilweise unmaßstäblich und/oder vergrößert und/oder verkleinert dargestellt wurden.

### Bezugszeichenaufstellung

- 1: Windkraftanlagengetriebe
- 2: Zahnrad
- 3: Außenstirnverzahnung
- 4: Gleitlagerbuchse
- 5: Achse

- 6: Zahnradträger
- 7: Längsmittelachse
- 8: Stirnfläche
- 9: Stirnfläche
- 10: Durchmesser

- 11: Durchmesser
- 12: Radialvorsprung
- 13: Anlagefläche
- 14: Stützschicht
- 15: Gleitschicht

- 16: Lauffläche
- 17: Bauelement
- 18: Formschlusselement
- 19: Oberfläche
- 20: Gleitlagerbuchse

- 21: Zwischenraum
- 22: Ringsteg
- 23: Zwischenraum
- 24: Zuführleitung
- 25: Verbindungsleitung

## Patentansprüche

1. Windkraftanlagengetriebe (1) mit einer Achse (5) und einem Zahnrad (2), wobei zwischen der Achse (5) und dem Zahnrad (2) zumindest eine Gleitlagerbuchse (4, 20) angeordnet ist, **dadurch gekennzeichnet, dass** die zumindest eine Gleitlagerbuchse (4, 20) über einen konischen Presssitz mit dem Zahnrad (2) verbunden ist, wobei die zumindest eine Gleitlagerbuchse (4, 20) eine ersten Stirnfläche (8) und eine dieser entlang einer Längsmittelachse (7) durch die zumindest eine Gleitlagerbusche (4, 20) zweite Stirnfläche (9) aufweist, und wobei die erste Stirnfläche (8) einen Durchmesser d (10) sowie die zweite Stirnfläche (9) einen Durchmesser D (11) aufweisen, wobei der Durchmesser D (11) größer ist als der Durchmesser d (10) und wobei anschließend an die Stirnfläche (9) mit dem Durchmesser D (11) eine Anlagefläche (13) für die zumindest eine Gleitlagerbuchse (4, 20) ausgebildet ist.

2. Windkraftanlagengetriebe (1) nach Anspruch 1, **dadurch gekennzeichnet, dass** das Verhältnis von D (11)/d (10) maximal 1,2 beträgt.

3. Windkraftanlagengetriebe (1) nach Anspruch 2, **dadurch gekennzeichnet, dass** das Verhältnis D (11)/d (10) ausgewählt ist aus einem Bereich von 1,0001 bis 1,02.

4. Windkraftanlagengetriebe (1) nach einem der Ansprüche 1 bis 3, **dadurch gekennzeichnet, dass** die Anlagefläche (13) durch das Zahnrad (2) gebildet wird.

5. Windkraftanlagengetriebe (1) nach Anspruch 4, **dadurch gekennzeichnet, dass** die Anlagefläche durch einen Radialvorsprung (12) des Zahnrades (2) gebildet ist.

6. Windkraftanlagengetriebe (1) nach einem der Ansprüche 1 bis 5, **dadurch gekennzeichnet, dass** zwei Gleitlagerbuchsen (4, 20) zwischen dem Zahnrad (2) und der Achse (5) zur Lagerung des Zahnrades (2) angeordnet sind, wobei die beiden Gleitlagerbuchsen (4, 20) derart angeordnet sind, dass die beiden zweiten Stirnflächen (9) mit dem größeren Durchmesser D (11) aufeinander zuweisen.

7. Windkraftanlagengetriebe (1) nach Anspruch 6, **dadurch gekennzeichnet, dass** die Anlageflächen (13) durch einen Ringsteg (22) gebildet sind, der an dem Zahnrad (2) radial nach innen in Richtung auf die Achse (5) sich erstreckend ausgebildet ist.

8. Windkraftanlagengetriebe (1) nach Anspruch 6, **dadurch gekennzeichnet, dass** die Anlagefläche (13) für jeweils ein Gleitlager (4, 20) durch das jeweils andere Gleitlager (20, 4) gebildet ist. ,.

9. Windkraftanlagengetriebe (1) nach einem der Ansprüche 1 bis 8, **dadurch gekennzeichnet, dass** die Gleitlagerbuchse(n) (4, 20) als Mehrschichtgleitlager ausgebildet ist.

10. Windkraftanlagengetriebe (1) nach Anspruch 9, **dadurch gekennzeichnet, dass** das Mehrschichtgleitlager im Bereich der Achse (5) eine Gleitschicht (15) aufweist.

11. Windkraftanlagengetriebe (1) nach Anspruch 10, **dadurch gekennzeichnet, dass** die Gleitschicht (15) über die Länge der Gleitlagerbuchse (4) in Axialrichtung eine gleichmäßige Schichtdicke aufweist.

12. Windkraftanlagengetriebe (1) nach Anspruch 10 oder 11, **dadurch gekennzeichnet, dass** die Gleitschicht (15) bis in den Bereich der Stirnfläche (9) mit dem größeren Durchmesser D (11) und/oder bis in den Bereich der Stirnfläche (8) mit dem Durchmesser d (10) ausgebildet ist.

13. Windkraftanlagengetriebe (1) nach einem der Ansprüche 1 bis 12, **dadurch gekennzeichnet, dass** die Gleitlagerbuchse(n) (4, 20) zusätzlich formschlüssig mit dem Zahnrad (2) verbunden ist.

14. Windkraftanlagengetriebe (1) nach einem der Ansprüche 1 bis 13, **dadurch gekennzeichnet, dass** eine an dem Zahnrad (2) anliegende Oberfläche (19) der Gleitlagerbuchse(n) (4, 20) eine Oberflächenrauhung aufweist.

15. Windkraftanlagengetriebe (1) nach einem der Ansprüche 7 bis 14, **dadurch gekennzeichnet, dass** der Ringsteg (22) unter Ausbildung eines Zwischenraums (23) beabstandet zur Achse (5) ausgebildet ist.

16. Windkraftanlagengetriebe (1) nach Anspruch 15, **dadurch gekennzeichnet, dass** in den Zwischenraum (23) eine Verbindungsleitung (25) mündet, die den Zwischenraum (23) mit der Umgebungsatmosphäre verbindet.

17. Windkraftanlage mit einem Windkraftanlagengetriebe (1), **dadurch gekennzeichnet, dass** das Windkraftanlagengetriebe (1) entsprechend einem der vorhergehenden Ansprüche ausgebildet ist.

## Claims

1. A wind power plant gear mechanism (1) with an axle (5) and a gearwheel (2), at least one plain bearing bush (4, 20) being arranged between the axle (5) and the gearwheel (2), **characterized in that** the at least one plain bearing bush (4, 20) is connected to the gearwheel (2) by a conical press fit, wherein the at least one plain bearing bush (4, 20) has a first end surface (8) and a second end surface (9) which lies opposite the former along a longitudinal center axis (7) through the at least one plain bearing bush (4, 20), and wherein the first end surface (8) has a diameter d (10) and the second end surface (9) has a diameter D (11), the diameter D (11) being greater than the diameter d (10) and wherein a bearing surface (13) for the at least one plain bearing bush (4, 20) is formed so as to adjoin the end surface (9) with the diameter D (11).

2. The wind power plant gear mechanism (1) as claimed in claim 1, **characterized in that** the ratio of D (11)/d (10) is a maximum of 1.2.

3. The wind power plant gear mechanism (1) as claimed in claim 2, **characterized in that** the ratio D (11)/d (10) is selected from a range of 1.0001 to 1.02.

4. The wind power plant gear mechanism (1) as claimed in any one of claims 1 to 3, **characterized in that** the bearing surface (13) is formed by the gearwheel (2).

5. The wind power plant gear mechanism (1) as claimed in claim 4, **characterized in that** the bearing surface is formed by a radial projection (12) of the gearwheel (2).

6. The wind power plant gear mechanism (1) as claimed in any one of claims 1 to 5, **characterized in that** two plain bearing bushes (4, 20) are arranged between the gearwheel (2) and the axle (5) for supporting the gearwheel (2), wherein the two plain bearing bushes (4, 20) are arranged such that the two second end surfaces (9) with the larger diameter D (11) point towards one another.

7. The wind power plant gear mechanism (1) as claimed in claim 6, **characterized in that** the bearing surfaces (13) are formed by an annular web (22) which is formed on the gear-wheel (2) extending radially inwardly in the direction of the axle (5).

8. The wind power plant gear mechanism (1) as claimed in claim 6, **characterized in that** the bearing surface (13) for a respective plain bearing (4, 20) is formed by the other respective plain bearing (20, 4).

9. The wind power plant gear mechanism (1) as claimed in any one of claims 1 to 8, **characterized in that** the plain bearing bush or bushes (4, 20) is/are configured as multi-layered plain bearing(s).

10. The wind power plant gear mechanism (1) as claimed in claim 9, **characterized in that** the multi-layered plain bearing has a sliding layer (15) in the region of the axle (5).

11. The wind power plant gear mechanism (1) as claimed in claim 10, **characterized in that** the sliding layer (15) has a uniform layer thickness in axial direction over the length of the plain bearing bush (4).

12. The wind power plant gear mechanism (1) as claimed in claim 10 or 11, **characterized in that** the sliding layer (15) is formed up to the area of the end surface (9) with the larger diameter D (11) and/or up to the area of the end surface (8) with the diameter d (10).

13. The wind power plant gear mechanism (1) as claimed in any one of claims 1 to 12, **characterized in that** the plain bearing bush or bushes (4, 20) is/are additionally connected to the gearwheel (2) in a form-fitting manner.

14. The wind power plant gear mechanism (1) as claimed in any one of claims 1 to 13, **characterized in that** a surface (19) of the plain bearing bush or bushes (4, 20) bearing against the gearwheel (2) has a roughened surface.

15. The wind power plant gear mechanism (1) as claimed in any one of claims 7 to 14, **characterized in that** the annular web (22) is designed to be spaced apart from the axle (5) forming an intermediate space (23).

16. The wind power plant gear mechanism (1) as claimed in claim 15, **characterized in that** a connecting line (25) opens into the intermediate space (23) which connects the intermediate space (23) to the surrounding atmosphere.

17. A wind power plant comprising a wind power plant gear mechanism (1), **characterized in that** the wind power plant gear mechanism (1) is designed according to any one of the preceding claims.

## Revendications

1. Transmission d'éolienne (1) comprenant un axe (5) et une roue dentée (2), dans laquelle au moins un coussinet lisse (4, 20) est agencé entre l'axe (5) et la roue dentée (2), **caractérisée en ce que** le au moins un coussinet lisse (4, 20) est relié à la roue dentée (2) par un ajustement serré conique, dans laquelle le au moins un coussinet lisse (4, 20) comporte une première face frontale (8) et une seconde face frontale (9) agencée à l'opposé de celle-ci le long d'un axe médian longitudinal (7) passant par le au moins un coussinet lisse (4, 20), et dans laquelle la première face frontale (8) présente un diamètre d (10) de même que la seconde face frontale (9) présente un diamètre D (11), dans laquelle le diamètre D (11) est plus grand que le diamètre d (10), et dans laquelle une surface d'appui (13) pour le au moins un coussinet lisse (4, 20) est formée dans le prolongement de la face frontale (9) présentant le diamètre D (11).

2. Transmission d'éolienne (1) selon la revendication 1, **caractérisée en ce que** le rapport D (11)/d (10) est au maximum de 1,2.

3. Transmission d'éolienne (1) selon la revendication 2, **caractérisée en ce que** le rapport D (11)/d (10) est choisi dans une plage de 1,0001 à 1,02.

4. Transmission d'éolienne (1) selon l'une quelconque des revendications 1 à 3, **caractérisée en ce que** la surface d'appui (13) est formée par la roue dentée (2).

5. Transmission d'éolienne (1) selon la revendication 4, **caractérisée en ce que** la surface d'appui est formée par une saillie radiale (12) de la roue dentée (2).

6. Transmission d'éolienne (1) selon l'une quelconque des revendications 1 à 5, **caractérisée en ce que** deux coussinets lisses (4, 20) sont disposés entre la roue dentée (2) et l'axe (5) pour le montage de la roue dentée (2), dans laquelle les deux coussinets lisses (4, 20) sont disposés de telle sorte que les deux secondes faces frontales (9) sont dotées du plus grand diamètre D (11).

7. Transmission d'éolienne (1) selon la revendication 6, **caractérisée en ce que** les surfaces d'appui (13) sont formées par une nervure annulaire (22,) qui est formée sur la roue dentée (2) s'étendant radialement vers l'intérieur en direction de l'axe (5).

8. Transmission d'éolienne (1) selon la revendication 6, **caractérisée en ce que** la surface d'appui (13) pour chaque coussinet lisse (4, 20) est formée par chaque autre coussinet lisse (20, 4) respectif.

9. Transmission d'éolienne (1) selon l'une quelconque des revendications 1 à 8, **caractérisée en ce que** le ou les coussinets lisses (4, 20) sont réalisés sous la forme d'un palier lisse multicouche.

10. Transmission d'éolienne (1) selon la revendication 9, **caractérisée en ce que** le palier lisse multicouche présente une couche de glissement (15) dans la région de l'axe (5).

11. Transmission d'éolienne (1) selon la revendication 10, **caractérisée en ce que** la couche de glissement (15) présente une épaisseur de couche uniforme dans la direction axiale sur toute la longueur du coussinet lisse (4).

12. Transmission d'éolienne (1) selon la revendication 10 ou 11, **caractérisée en ce que** la couche de glissement (15) est formée dans la zone de la face frontale (9) avec le plus grand diamètre D (11) et/ou dans la zone de la face frontale (8) avec le diamètre d (10).

13. Transmission d'éolienne (1) selon l'une quelconque des revendications 1 à 12, **caractérisée en ce que** le ou les coussinets lisses (4, 20) sont en outre reliés à la roue dentée (2) par engagement positif.

14. Transmission d'éolienne (1) selon l'une quelconque des revendications 1 à 13, **caractérisée en ce qu'**une surface (19) du ou des coussinets lisses (4, 20) attenante à la roue dentée (2) présente une rugosité de surface.

15. Transmission d'éolienne (1) selon l'une quelconque des revendications 7 à 14, **caractérisée en ce que** la nervure annulaire (22) est réalisée à distance de l'axe (5) pour former un espace intermédiaire (23).

16. Transmission d'éolienne (1) selon la revendication 15, **caractérisée en ce qu'**une conduite de liaison (25) débouche dans l'espace intermédiaire (23), qui relie l'espace intermédiaire (23) à l'atmosphère ambiante.

17. éolienne avec une transmission d'éolienne (1), **caractérisée en ce que** la transmission d'éolienne (1) est formée selon l'une quelconque des revendications précédentes.
